Europäisches Patentamt

European Patent Office

Office européen des brevets

(19)

(11) Publication number: **0 077 653**
**B1**

# (12) EUROPEAN PATENT SPECIFICATION

(45) Date of publication of patent specification: **05.02.86**

(51) Int. Cl.⁴: **D 06 B 19/00**

(21) Application number: **82305476.2**

(22) Date of filing: **14.10.82**

(54) **Device for applying foam to textiles.**

(30) Priority: **15.10.81 US 311773**

(43) Date of publication of application:
**27.04.83 Bulletin 83/17**

(45) Publication of the grant of the patent:
**05.02.86 Bulletin 86/06**

(84) Designated Contracting States:
**BE DE FR GB IT LU NL**

(56) References cited:
**US-A-3 628 503**
**US-A-3 697 314**
**US-A-3 865 078**
**US-A-4 141 315**

(73) Proprietor: **WEST POINT-PEPPERELL, INC.**
**400 West 10th Street**
**West Point Georgia 31833 (US)**

(72) Inventor: **Pacifici, Joseph A.**
**5 Post Oak Drive**
**LaGrange Georgia 30240 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

It is well recognized that wet processing in the textile industry is a major source of energy consumption. With the advent of high energy costs, and concern as to the availability of oil and natural gas, considerable effort has been expended in reducing energy usage for wet processing techniques such as bleaching, dyeing, printing and finishing.

A technology which has developed as a result of energy conservation research in the textile field is the use of foams for wet processing. By foaming techniques, the amount of liquid applied to the textiles is reduced substantially thereby greatly lowering the amount of energy required to dry the product. Not only is there a saving of energy, but foaming also permits increased productivity and a variety of other advantages.

Known foaming techniques generally utilize metering rolls and/or doctor blades for applying the correct amount of foam to the textile. A more complete discussion of such arrangements is presented in US—A—4,297,860. This discloses an arrangement which includes an applicator in which foam is directed to an apertured spreader plate having on its downstream side a chamber which is trapezoidal in cross section and filled with a bed of porous material. Foam passing through the porous bed exits from the applicator through an elongate discharge nozzle at the tapered end of the chamber.

The applicator disclosed in US—A—4,297,860 is capable of producing a uniform foam discharge, but it suffers the discharge of requiring a substantial amount of purge time before this is accomplished. Furthermore, the applicator is not capable of being readily altered in orientation to permit variations in the direction of foam discharge.

In US—A—4,201,321, a device comprising a pair of concentric pipes having different diameters is disclosed as being suitable for use as an applicator in a foam generating operation. A foamable liquid reaction mass supplied to the inner pipe passes through overflow apertures at the top thereof into a hollow space between the pipes from which it exits through a longitudinally extending discharge slit at the bottom of the outer pipe onto a conveyor where a sheet of foam is formed. The device is clearly not intended to be used in any other angular orientation and can only be used for discharging the foamable mass onto the top of a substantially horizontal web. In order to achieve uniform discharge of the foamable reaction mass, the inner pipe has a varying cross section produced by wedges introduced within the inner pipe. These wedges, and the provision of the inner pipe outlet apertures only at its top, lead to dead spots in the device, making it unsuitable for use with a viscous foam supplied to and passing through the device.

US—A—3,967,314 discloses a device, hereinafter referred to as of the kind described, for receiving a supply of foam and discharging the foam in a choice of directions onto a textile material, the device comprising an outer pipe provided with a longitudinally extending discharge slit, a porous material within the pipe covering the discharge slit, and an inlet for supplying foam under pressure to the interior of the pipe and hence through the porous material and out of the discharge slit. This device is intended to receive a supply of coarse, comparatively fluent, foam, and the porous material, which is exemplified as a porous plate or an insert of fabric or felt, transforms the foam into a finer, more viscous, foam, suitable for application. The use of the porous material does provide a back pressure enabling the device to be oriented so as to discharge the foam in different directions. However, the plate, or insert of fabric or felt, is comparatively thin, compared to the internal diameter of the pipe and the majority of the interior of the pipe exists as an unobstructed space. The foam, flowing into this space at one end of the pipe, will tend to stagnate within the pipe at positions generally diametrically opposite to the discharge slit. Generally foams a semi-stable and, upon stagnation, tend quickly to breakdown into liquid and air. This leads to serious inhomogeneity in the foam leaving the device with consequential potential spluttering, blockages, and streaking on the material to which the foam is applied.

In accordance with the present invention, a device of the kind described is characterised by an inner pipe concentrically arranged within the outer pipe to define an annular space therebetween and provided with a plurality of longitudinally extending slits, which are angularly spaced around the axis of the pipes relatively to one another and to the discharge slit; by the porous material filling the annular space; and by the inlet leading into the inner pipe.

With this construction, foam supplied to the inner pipe passes through its slits, and then in both directions around the annular bed of porous material, and is discharged from the slit in the outer pipe onto a textile material moved past the discharge slit. The direction of discharge can be changed merely by rotating the concentric pipe arrangement about its longitudinal axis.

The invention will be described in detail with respect to the accompanying drawings, wherein:—

Figure 1 is a cross-sectional view of a preferred embodiment of the invention; and,

Figure 2 is a sectional view taken on the line 2—2 of Figure 1.

Referring to the drawings, an inner pipe 10 is positioned in concentric relationship with respect to an outer pipe 12. The external diameter of pipe 10 is less than the internal diameter of pipe 12 so as to define a space 14 between the pipes which is filled with porous material 16. Suitable for this purpose are spherical beads formed from various substances, e.g. glass and having a diameter of approximately 3 mm.

The pipes 10 and 12 are retained concentric by end caps 18 and 20 through and beyond wnicn the inner pipe 10 projects. Suitable O-rings 22, 24, 26 and 28 seal the pipes with respect to the end caps.

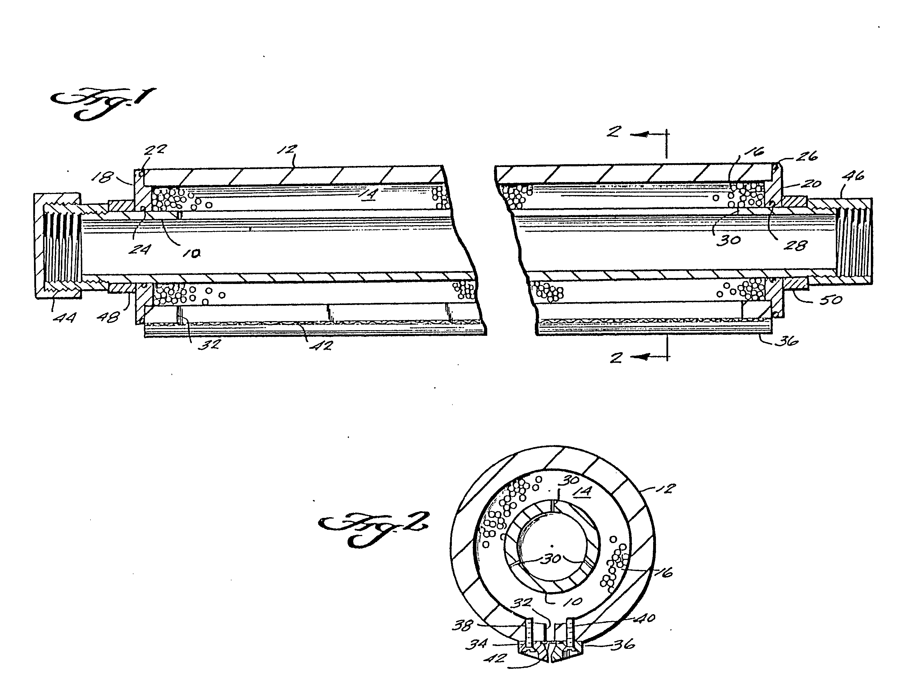

The inner pipe 10 is provided with a plurality of slits 30, as can be appreciated particularly with reference to Figure 2. These slits are disposed 120° apart and extend substantially the entire length of the portion of pipe 10 between caps 18 and 20. Typically, the slits have a width of about 0.5 mm, which is substantially less than the diameter of the beads 16. Each slit 30 may be formed by a single elongate opening in pipe 10 or, alternatively, by a plurality of spaced apertures aligned along the length of the pipe.

The outer pipe 12 has a discharge slit 32 extending longitudinally of the pipe and having a length substantially the same as that of the slits 30. Slit 32 is angularly offset with respect to the slits 30.

The actual width of the discharge opening from the outer pipe 12 is determined by a pair of tapered elements 34 and 36 secured to the exterior of the pipe by screws 38 and 40. By conventional means, the opening established by the spacing between elements 34 and 36 can be varied as desired. A typical range of adjustment is from 0—3.2 mm.

The slit 32 has a width which is larger than the diameter of the beads 16. Accordingly, a screen 42 is held in place over slit 32 by elements 34 and 36 to prevent the escape of the beads.

The ends of inner pipe 10 extending beyond caps 18 and 20 are threaded to permit various connections. While it is possible for foam to be supplied to the applicator from both ends of pipe 10, it is preferred that the supply of foam be from one end only. Accordingly, a cover 44 is connected to an end of the pipe and the opposite end receives the supply of foam through an adaptor indicated generally as 46. Both the cover 44 and adaptor 46 are separated from end caps 18 and 20 by spacers 48 and 50.

In operation, foam supplied through adaptor 46 to the interior of pipe 10 passes through slits 30 into the space 14 between the pipes. The porous bed of beads 16 provides a limited amount of back pressure against the flow of foam to ensure uniform distribution of the foam as it passes through slit 32 in pipe 12 and then through the screen and the discharge opening defined by elements 34 and 36. With the movement of a textile past the discharge opening, the foam is evenly applied thereto.

By merely rotating the applicator, the direction of discharge can be altered, as desired. Furthermore, the compact structure of the applicator facilitates the use of more than one applicator in close proximity to one another. This can be advantageous, for example when it is desired to apply foam to opposite sides of a textile by separate applicators.

Although the arrangement which has been described provides a uniform foam discharge very quickly after initial introduction of the foam to the applicator, it is possible to replace the cover 44 with a diverter, such as a gate valve, to permit foam properties to be checked before it is allowed to pass through the applicator's discharge opening. Of course, such a diverter also can permit the foam to be sampled any time after start-up.

A feature of the applicator which has been described is that it can be made of different lengths for use with a variety of textiles ranging from narrow knits to wide carpets.

**Claims**

1. A device for receiving a supply of foam and discharging the foam in a choice of directions onto a textile material, the device comprising an outer pipe (12) provided with a longitudinally extending discharge slit (32), a porous material (16) within the pipe covering the discharge slit, and an inlet (46) for supplying foam under pressure to the interior of the pipe and hence through the porous material and out of the discharge slit; characterised by an inner pipe (10) concentrically arranged within the outer pipe (12) to define an annular space (14) therebetween and provided with a plurality of longitudinally extending slits (30), which are angularly spaced around the axis of the pipes relatively to one another and to the discharge slit (32); by the porous material (16) filling the annular space (14); and by the inlet (46) leading into the inner pipe (10).

2. A device according to claim 1, wherein the porous material comprises a bed of spherical beads (16).

3. A device according to claim 2, wherein the beads (16) have diameters which are larger than the widths of the slits (30) in the inner pipe (10), and which are smaller than the width of the slit (32) in the outer pipe (12); the beads (16) being prevented from escaping through the slit (32) by a screen (42).

4. A device according to any one of the preceding claims, wherein the discharge slit (32) directs the foam through a discharge opening defined between two elements (34, 36) projecting radially outwardly, and extending longitudinally, of the outer pipe (12), one adjacent to each side of the discharge slit.

5. A device according to claim 4, wherein the elements (34, 36) are adjustably mounted on the outer pipe (32) whereby their mutual spacing and hence the width of the discharge opening is variable.

6. A device according to any one of the preceding claims, wherein the inlet (46) leads into at least one end of the inner pipe (10).

7. A device according to any one of the preceding claims, wherein there are three of the slits (30) in the inner pipe, angularly offset from one another by 120°.

8. A device according to any one of the preceding claims, wherein the pipes (10, 12) are maintained concentric by end caps (18, 20) which are mounted on respective ends of the outer pipe (12) and through which ends of the inner pipe (10) project.

9. A device according to any one of the preceding claims, wherein the slits (30) in the inner pipe and the discharge slit (32) extend for substantially the entire length of the annular space (14).

**Patentansprüche**

1. Vorrichtung zur Aufnahme eines Vorrats von Schaum und zur Abgabe des Schaums in einer Auswahl von Richtungen auf ein Textilmaterial, wobei die Vorrichtung ein äußeres Rohr (12) aufweist, das mit einem sich in Längsrichtung erstreckenden Abgabeschlitz (32) versehen ist, mit einem porösen Material (16) in dem Rohr, welches den Abgabeschlitz überdeckt, und mit einem Einlaß (46) für die Zufuhr von Schaum unter Druck zu dem Inneren des Rohrs und damit durch das poröse Material und aus dem Abgabeschlitz heraus; gekennzeichnet durch ein inneres Rohr (10), das konzentrisch in dem äußeren Rohr (12) angeordnet ist, um einen Ringraum (14) dazwischen zu bilden und das mit einer Anzahl von sich in Längsrichtung erstreckenden Schlitzen (30) versehen ist, die im Winkel um die Achse der Rohre in bezug aufeinander und auf den Abgabeschlitz (32) beabstandet sind; und dadurch, daß das poröse Material (16) den Ringraum (14) füllt; und daß der Einlaß (46) in das innere Rohr (10) führt.

2. Vorrichtung nach Anspruch 1, dadurch gekennzeichnet, daß das poröse Material ein Bett von kugelförmigen Perlen (16) aufweist.

3. Vorrichtung nach Anspruch 2, dadurch gekennzeichnet, daß die Perlen (16) Durchmesser haben, die größer als die Breite der Schlitze (30) in dem inneren Rohr (10) und die kleiner als die Breite der Schlitze (32) in dem äußeren Rohr (12) sind, wobei die Perlen (16) durch ein Gitter (42) am Austritt durch den Schlitz (32) gehindert sind.

4. Vorrichtung nach einem der vorhergehenden Ansprüche, wobei der Abgabeschlitz (32) den Schaum durch eine Abgabeöffnung leitet, die zwischen zwei Elementen (34, 36) gebildet ist, welche nach außen radial vorstehen und die sich in Längsrichtung des äußeren Rohrs (12) erstrecken, und zwar an jeder Seite des Abgabeschlitzes.

5. Vorrichtung nach Anspruch 4, dadurch gekennzeichnet, daß die Elemente (34, 36) einstellbar an dem äußeren Rohr (32) angebracht sind, wodurch ihr gegenseitiger Abstand und damit die Breite des Abgabeöffnung veränderlich ist.

6. Vorrichtung nach einem der vorhergehenden Ansprüche, wobei der Einlaß (46) in mindestens ein Ende des inneren Rohrs (10) führt.

7. Vorrichtung nach einem der vorhergehenden Ansprüche, wobei in dem inneren Rohr drei Schlitze (30) vorgesehen sind, die voneinander um 120° versetzt sind.

8. Vorrichtung nach einem der vorhergehenden Ansprüche, worin die Rohr (10, 12) durch Endkappen (18, 20) konzentrisch gehalten werden, die an den jeweiligen Enden des äußeren Rohrs (12) angebracht sind und durch die sich das innere Rohr (10) erstreckt.

9. Vorrichtung nach einem der vorhergehenden Ansprüche, worin die Schlitze (30) im inneren Rohr und der Abgabeschlitz (32) sich im wesentlichen über die gesamte Länge des Ringraums (14) erstrecken.

**Revendications**

1. Dispositif destiné à recevoir une alimentation de mousse et à débiter la mousse dans un choix de directions sur une matière textile, ce dispositif comprenant un tube extérieur (12) pourvu d'une fente de débit longitudinale (32), une matière poreuse (16) dans le tube couvrant la fente de débit et une entrée (46) pour fournir de la mousse sous pression à l'intérieur du tube et ensuite à travers la matière poreuse et à l'extérieur par la fente de débit, caractérisé par un tube intérieur (10) disposé concentriquement dans le tube extérieur (12) pour définir un espace annulaire (14) entre eux et pourvu de plusieurs fentes longitudinales (30) qui sont espacées angulairement autour de l'axe des tubes les unes par rapport aux autres et par rapport à la fente de débit (32), par la présence de la matière poreuse (16) remplissant l'espace annulaire (14) et par la fait qui l'entrée (46) s'ouvre dans le tube intérieur (10).

2. Dispositif suivant la revendication 1, dans lequel la matière poreuse comprend un lit de perles sphériques (16).

3. Dispositif suivant la revendication 2, dans lequel les perles (16) ont des diamètres qui sont supérieurs aux largeurs des fentes (30) dans le tube intérieur (10) et qui sont inférieurs à la largeur de la fente (32) dans le tube extérieur (12), les perles (16) étant empêchées de s'échapper par la fente (32) par un treillis (42).

4. Dispositif suivant l'une quelconque des revendications précédentes, dans lequel la fente de débit (32) dirige la mousse par une ouverture de débit définie entre deux éléments (34, 36) qui s'étendent radialement vers l'extérieur et longitudinalement par rapport au tube extérieur (12), à raison d'un près de chaque côté de la fente de débit.

5. Dispositif suivant la revendication 4, dans lequel les éléments (34, 36) sont montés de façon réglable sur le tube extérieur (32), leur espacement mutuel et donc la largeur de l'ouverture de débit étant ainsi variable.

6. Dispositif suivant l'une quelconque des revendications précédentes, dans lequel l'entrée (46) s'ouvre dans au moins une extrémité du tube intérieur (10).

7. Dispositif suivant l'une quelconque des revendications précédentes, dans lequel trois fentes (30) sont prévues dans le tube intérieur et sont angulairement décalées l'une de l'autre de 120°.

8. Dispositif suivant l'une quelconque des revendications précédentes, dans lequel les tubes (10, 12) sont maintenus concentriques par des chapeaux d'extrémité (18, 20) qui sont montés sur

7

0 077 653

8

les extrémités respectives du tube extérieur (12) et à travers lesquelles les extrémités du tube intérieur (10) se prolongent.

9. Dispositif suivant l'une quelconque des revendications précédentes, dans lequel les fentes (30) dans le tube intérieur et la fente de débit (32) s'étendent en substance sur toute la longueur de l'espace annulaire (14).

*Fig.1*

*Fig.2*

0 077 653